# EUROPEAN PATENT APPLICATION

(11) **EP 4 852 284 A1**
(43) Date of publication of application: **09.12.2026**
(21) Application number: 25747370.2
(22) Date of filing: 01.02.2025
(51) Int. Cl.: H02K 9/08, H02K 9/12, H02K 9/19, H02K 5/04, H02K 5/20, H02K 9/00, H02K 5/00

(54) **AXIAL-FLUX ELECTRIC MACHINE AND COVER OF AN AXIAL-FLUX ELECTRIC MACHINE**

(30) Priority: 01.02.2024 US 202463548654 P
(71) Applicant: Weg Equipamentos Elétricos S.A., 89256900 Jaraguá do Sul (BR)
(72) Inventor: MANENTE, João Paulo Correa, 89259-560 Jaraguá do Sul (BR); BORGES, Samuel Santos, 89251-490 Jaraguá do Sul (BR); CARVALHO, Thiago Piazera, 89252-090 Jaraguá do Sul (BR)
(74) Representative: Plasseraud IP
(86) International application number: PCT/BR2025/050036
(87) International publication number: WO 2025/160648

(57) **Abstract**

The present invention relates to an axial-flux electric machine (1) comprising at least one cover (1), wherein the cover (1) comprises at least one cooling channel (5) through which a cooling gas passes, and wherein the at least one cooling channel (5) comprises at least one expansion region (E) designed to ensure controlled expansion of the cooling gas.

## Description

### FIELD OF INVENTION

The present invention relates to an axial-flux electric machine and, more specifically, to an axial-flux motor or generator.

### BACKGROUND OF THE INVENTION

Axial electromagnetic flux electric machines are widely known in the art and basically comprise at least one stator and at least one disc-shaped rotor, wherein the electromagnetic flux travels in the axial direction of the machine's rotating shaft. They may comprise either electric motors or electric generators.

In one of the known solutions for cooling axial-flux motors, an external mechanism, such as a pump or compressor, pumps cooling fluid into the motor (preferably into the interior of the housing and/or stator) so that the fluid can extract heat from the motor. The greater the heat extraction capacity, the higher the power density (kW/kg) at which the motor can operate.

Thus, it is known in the state of the art to form cooling channels for the passage of cooling fluid through motor components.

Document EP2606561, for example, shows an electrical machine with an annular chamber through which a cooling medium can circulate around the stator coils.

Document KR101999860, in turn, discloses an electric motor with a cooling solution comprising a cooling fluid distribution chamber that includes a portion of the introduced cooling fluid and a second cooling fluid distribution path for guiding another portion of the cooling fluid toward the rear cover side.

Document WO2019/171318, in turn, discloses a cooling component for an electric motor comprising a channel defined by an outer ring, an inner ring concentric with the outer ring, and linear segments extending radially from the inner ring toward the outer ring.

### OBJECTIVES OF THE INVENTION

It is one of the objectives of the present invention to provide an axial-flux electric machine with a cooling system having efficient cooling performance.

It is a further object of the present invention to provide an axial-flux electric machine with a cooling system that utilizes temperature reduction through the expansion of a cooling gas to improve the cooling performance of an axial-flux electric machine.

### Summary of the Invention

The present invention relates to an electric machine cover and to an axial-flux electric machine comprising such an electric machine cover.

The axial-flux electric machine comprises a housing with at least one cover, wherein the at least one cover comprises at least one cooling channel through which a cooling gas passes, and wherein the at least one cooling channel comprises at least one expansion region designed to ensure controlled expansion of the cooling gas.

The cover comprises a cooling fluid inlet and a cooling fluid outlet, and, preferably, the expansion region has a cross-sectional area with a cross-sectional expansion rate of between 150% and 1000% from the cooling fluid inlet to the cooling fluid outlet.

In one embodiment of the invention, the expansion region is formed as a part of the geometry of the cooling channel.

The cooling channel may be formed integrally with the cover. However, in an alternative embodiment, the cooling channel may be formed in a structure coupled to the cover.

### BRIEF DESCRIPTION OF THE DRAWINGS

The present invention will be described in more detail below, with reference to the accompanying drawings, in which:
Figure 1 - is a perspective view of an axial-flux electric machine according to an embodiment of the present invention;
Figure 2 - is a plan view of an axial-flux electric machine according to an embodiment of the present invention;
Figure 3 - is a schematic view showing the assembly of some internal components of an axial-flux electric machine according to an embodiment of the present invention; and
Figure 4 - is a schematic illustration of four possible configurations for a cooling channel of an axial-flux electric machine according to the present invention.

### DETAILED DESCRIPTION OF THE INVENTION

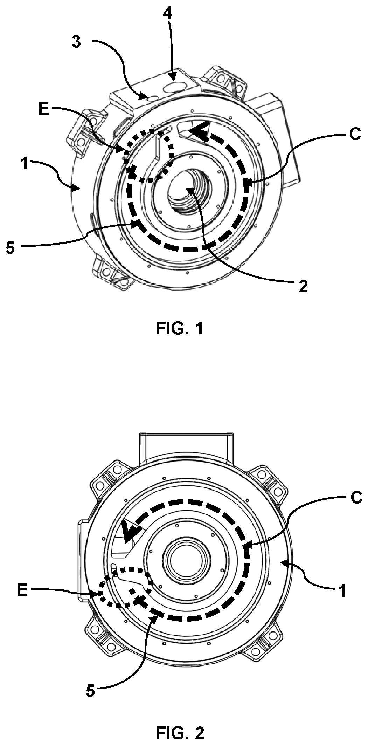

Figure 1 shows an axial-flux electric motor according to an embodiment of the present invention.

Although the present invention is described as embodied in an electric motor, it should be understood that the solution of the present invention could equally be applied to other axial-flux electric machines, such as axial-flux generators. The internal components and operation of an axial-flux electric machine are known to those skilled in the art; therefore, the present description will focus only on the components necessary for an understanding of the invention.

As can be seen in Figure 1, in the illustrated embodiment, the electric motor comprises at least one cover 1, a central through-hole 2, and cooling fluid inlet holes 3 and cooling fluid outlet holes 4. The through-hole 2 is intended to receive a shaft; however, it should be understood that in other embodiments of the invention, the shaft could be integrated into the motor.

It should be noted that the machine may comprise a housing with a body closed by a cover or covers connected to one another to form an enclosure. However, it should be understood that the enclosure could be formed differently, for example, with a central body part and two side covers.

As illustrated in the figures, the cover 1 comprises at least one cooling channel 5 for the circulation of a cooling fluid and, more specifically, a cooling gas.

This cooling fluid cools the internal components of the machine and, naturally, more efficiently cools those components adjacent to the cover. Figures 1 and 2 show, schematically, the cooling gas cooling circuit C.

The at least one cooling channel 5, which is illustrated for visualization purposes in Figures 1 and 2, may be formed integrally with the cover-for example, as a cast or machined part-or may be formed in a coupled structure, such as an internal cover insert.

The present invention proposes the formation of at least one expansion region E in at least one cooling channel 5. This expansion region is designed to ensure controlled expansion of the cooling gas, so that the gas temperature reduces to levels suitable for preventing external freezing and abrupt pressure drops, maintaining the efficiency of the cooling circuit C.

Thus, according to the present invention, the cooling channel 5 requires an expansion of the cross-sectional area between the fluid inlet and outlet. Such expansion preferably has a cross-sectional expansion rate of between 150% and 1000% from the cooling fluid inlet to the cooling fluid outlet.

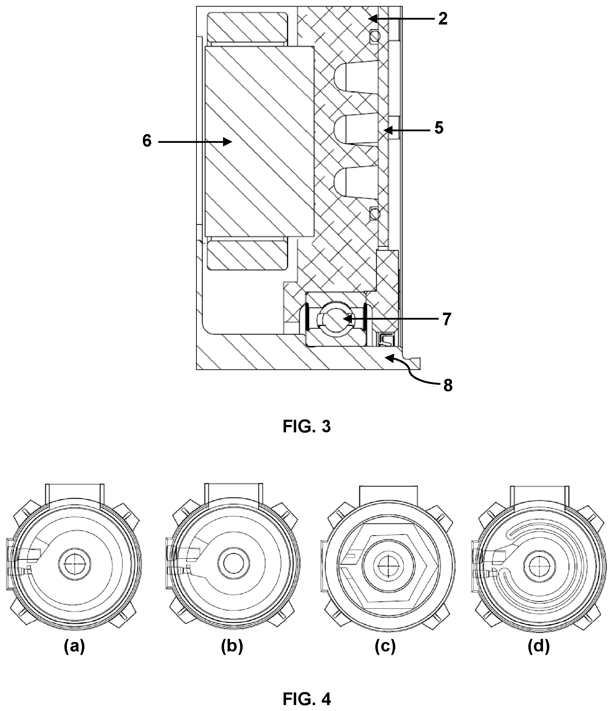

Such expansion may preferably occur gradually, as shown in the exemplary embodiment of Figure 4a, or abruptly, as shown in Figure 4b. To maintain a gradual expansion, the rate of area expansion per channel length should not exceed a rate of 4000%/m.

In embodiments of the invention, the expansion region E is formed as part of the geometry of the cooling channel and comprises a region capable of expanding in a controlled manner a gas passing through it.

The cross-section of the channel 5 may have various shapes, such as circular, elliptical, rectangular, trapezoidal, or polygonal. The cooling channels may also be designed with custom or irregular shapes to meet specific site conditions or flow requirements, provided that the area expansion rate criteria are satisfied.

As shown in Figure 3, in one embodiment of the present invention, the stator 6 of the machine is coupled to the cover 1, and in this embodiment, the at least one cooling channel 5 is particularly efficient for cooling the stator 6.

Thus, it should be noted that, in the present invention, the one or more expansion regions can be strategically designed with defined geometries and locations to avoid hot spots in the stator fixed to the inner face of the cover.

In this embodiment, a bearing 7 may also be provided to receive the machine shaft 8, and this bearing 7 is also efficiently cooled by the cooling system (cooling channel 5) of the cover 1.

In embodiments of the invention, the cover 1 may further comprise a seal to prevent leakage of the cooling gas.

Figure 4 shows a schematic illustration of four possible configurations (a, b, c, and d) for a cooling channel of an axial-flux electric machine according to the present invention. In these exemplary embodiments, the expansion regions E are formed by different geometries. It should be noted that the expansion region could have other geometries, provided that it allows for a controlled expansion of the cooling gas.

In this regard, viewed from the front as shown in Figure 4, the channels have different shapes between the cooling fluid inlet and the cooling fluid outlet, such as circular-see Figures 4a and 4b-polygonal (Figure 4c), and serpentine (Figure 4d).

Thus, the present invention, by providing at least one expansion region E in the cooling channel, utilizes the temperature reduction resulting from gas expansion to improve the cooling performance of an axial-flow machine.

Although the described embodiments focus on a cover 1 with a cooling channel, it should be understood that the machine could have two covers with cooling channels that close against each other, with or without a housing body interposed between them.

Having described exemplary embodiments of the present invention, it should be understood that the scope of the present invention encompasses other possible variations of the described inventive concept, being limited solely by the content of the claims, including any possible equivalents.

## Claims

1. An axial-flux electric machine comprising at least one cover (1), **characterized by the fact that** the cover (1) comprises at least one cooling channel (5) through which a cooling gas passes, wherein the at least one cooling channel (5) comprises at least one expansion region (E) designed to ensure controlled expansion of the cooling gas.

2. The machine according to claim 1, **characterized by the fact that** the cover further comprises a colling fluid inlet (3) and a cooling fluid outlet (4), and wherein the expansion region has a cross-sectional area with a cross-sectional expansion rate of between 150% and 1000% from the cooling fluid inlet (3) to the cooling fluid outlet (4).

3. The machine according to claim 1 or 2, **characterized by the fact that** the expansion region (E) is formed as a part of the geometry of the cooling channel (5).

4. The machine according to any one of claims 1 to 3, **characterized by the fact that** the cooling channel (5) is formed integrally with the cover (1).

5. The machine according to any one of claims 1 to 3, **characterized by the fact that** the cooling channel (5) is formed in a structure coupled to the cover (1).

6. A cover (1) for an axial-flux electric machine, **characterized by the fact that** it comprises at least one cooling channel (5) through which a cooling gas passes, wherein the at least one cooling channel (5) comprises at least one expansion region (E) designed to ensure controlled expansion of the cooling gas.

7. The cover, according to claim 6, **characterized by the fact that** it further comprises a cooling fluid inlet (3) and a cooling fluid outlet (4), and wherein the expansion region has a cross-sectional area with a cross-sectional expansion rate of between 150% and 1000% from the cooling fluid inlet (3) to the cooling fluid outlet (4).

8. The cover, according to claim 6 or 7, **characterized by the fact that** the expansion region (E) is formed as a part of the geometry of the cooling channel (5).

9. The cover, according to any one of claims 6 to 8, **characterized by the fact that** the cooling channel (5) is formed integrally with the cover (1).

10. The cover, according to any one of claims 6 to 8, **characterized by the fact that** the cooling channel (5) is formed in a structure coupled to the cover (1).
